# EUROPÄISCHE PATENTANMELDUNG

(11) **EP 4 484 926 A1**
(43) Veröffentlichungstag der Anmeldung: **01.01.2025**
(21) Anmeldenummer: 24176714.4
(22) Anmeldetag: 17.05.2024
(51) Int. Cl.: G01N 21/25, G01N 21/53, G01N 21/85, A47L 15/42, D06F 34/22, G01J 3/10, G01J 3/46, G01N 21/31

(54) **HAUSHALTSGERÄT MIT EINER SENSORVORRICHTUNG**

(30) Priorität: 30.06.2023 DE 102023117402
(71) Anmelder: emz-Hanauer GmbH & Co. KGaA, 92507 Nabburg (DE)
(72) Erfinder: Schmid, Thomas, 92693 Eslarn (DE); Brabec, Martin, 92507 92507 (DE); Schade, Lukas, 92507 Nabburg (DE)
(74) Vertreter: Hannke, Christian

(57) **Zusammenfassung**

Haushaltsgerät (1) mit einer Sensorvorrichtung (2), wobei die Sensorvorrichtung (2) dazu ausgebildet und vorgesehen ist, anhand der (spektralen) Messwertsignatur Informationen über die chemischen und physikalischen Eigenschaften einer Flüssigkeit zu gewinnen. Mithilfe der Messwertsignatur kann beispielsweise die Trübheit einer Flüssigkeit (7) bestimmt werden, wobei die Sensorvorrichtung (2) eine Lichtsenderseite und eine Lichtempfängerseite aufweist, wobei Licht von der Lichtsenderseite zu der Lichtempfängerseite übertragbar ist und nach der Übertragung mittels eines oder mehrerer Lichtempfänger (6) empfangbar ist, wobei die Sensorvorrichtung (2) weiter dazu vorgesehen und ausgebildet ist, eine Farbe der Flüssigkeit (7) zu erkennen.

## Beschreibung

Die vorliegende Erfindung betrifft ein Haushaltsgerät mit einer Sensorvorrichtung, wobei die Sensorvorrichtung dazu ausgebildet und vorgesehen ist anhand der (spektralen) Messwertsignatur Informationen über die chemischen und physikalischen Eigenschaften einer Flüssigkeit zu gewinnen. Mithilfe der Messwertsignatur kann beispielsweise die Trübheit einer Flüssigkeit bestimmt werden. Bei der Flüssigkeit kann es sich beispielsweise um ein Prozess- oder Reinigungswasser handeln und ist in einem Nassraum des Haushaltsgeräts angeordnet. Die Trübheit kommt beispielsweise durch optische Streuung aufgrund von Partikeln in der Flüssigkeit sowie durch optische Absorption der einzelnen Bestandteile der Flüssigkeit zu Stande. Das Haushaltsgerät kann beispielsweise eine Spülmaschine, eine Waschmaschine, oder ein anderes Gerät sein, welches eine Flüssigkeit beinhalten kann. Die Sensorvorrichtung umfasst eine Lichtsenderseite und eine Lichtempfängerseite, wobei Licht zwischen der Lichtsenderseite und der Lichtempfängerseite und durch die Flüssigkeit, welche zwischen der Lichtsenderseite und der Lichtempfängerseite zumindest teilweise angeordnet ist, übertragbar ist. Das entlang der Messstrecke übertragene Licht ist am Ende mittels eines oder mehrerer Lichtempfänger empfangbar.

Derartige Haushaltsgeräte mit Sensorvorrichtungen sind aus dem Stand der Technik hinreichend bekannt, sodass mittels dieser Sensorvorrichtung die Trübheit einer entsprechenden Flüssigkeit erkannt werden kann, um einen Verschmutzungsgrad des Reinigungswasser erkennen zu können.

Gemäß dem Stand der Technik, also einem Haushaltsgerät mit einer Sensorvorrichtung zur Erkennung einer Trübheit eines Reinigungswassers, kann jedoch nicht auf die Farbe des Reinigungswassers zurückgeschlossen werden.

Es ist demnach die Aufgabe der vorliegenden Erfindung, ein Haushaltsgerät mit der Sensorvorrichtung bereitzustellen, wobei die Sensorvorrichtung dazu vorgesehen und ausgebildet ist er, eine Farbe des Reinigungswasser zu erkennen.

Diese Aufgabe wird gelöst von einem Haushaltsgerät mit den Merkmalen des Patentanspruchs 1 sowie einem Verfahren zum Bestimmen einer Farbe einer Flüssigkeit, mit den Merkmalen des Patentanspruchs 20.

Kerngedanke der vorliegenden Erfindung ist es, ein Haushaltsgerät mit einer Sensorvorrichtung bereitzustellen, wobei die Sensorvorrichtung dazu ausgebildet und vorgesehen ist, eine Trübheit einer Flüssigkeit, beispielsweise eines Reinigungswasser, zu erkennen. Dabei umfasst die Sensorvorrichtung eine Lichtsenderseite und eine Lichtempfängerseite, wobei Licht von der Lichtsenderseite zu der Lichtempfängerseite übertragbar ist und nach der Übertragung mittels eines Lichtempfängers empfangbar ist. Erfindungsgemäß ist es nun vorgesehen, dass die Sensorvorrichtung weiter dazu vorgesehen und ausgebildet ist, eine Farbe des Reinigungswasser zu erkennen.

Alternativ bzw. kumulativ ist es denkbar, dass mittels der Sensorvorrichtung die optische Absorption bzw. Transmission und/oder die optische Streuung durch die Flüssigkeit erkennbar ist.

Anhand der Farbe können Rückschlüsse auf die Zusammensetzung des Mediums gemacht werden, da je nach Zusammensetzung unterschiedliche Sensorsignale zu erwarten sind. Beispielsweise könnten die Bestandteile des flüssigen Mediums anhand ihrer Farbe identifiziert werden und sowohl qualitativ als auch quantitativ bestimmt werden. Bestandteile des flüssigen Mediums könnten beispielsweise verschiedene Schmutzarten, Waschmittel oder Farbstoff sein.

Dadurch, dass nun die Sensorvorrichtung auch dazu vorgesehen ausgebildet ist, eine Farbe der Flüssigkeit zu erkennen, kann beim Erkennen einer Verfärbung der Flüssigkeit entsprechend reagiert werden. Die Sensorsignale können an eine Steuereinheit angebunden werden, mit welcher es möglich ist, dass das Hausgerät gezielt Aktionen in Abhängigkeit der Messergebnisse ausführen kann bzw. den Betrieb des Hausgeräts zu steuern vermag.

Solche Aktionen können beispielsweise Fehlermeldungen, akustische Signale, Anpassen des Waschprogramms oder Kommunikation mit dem Smartphone über eine Drahtlosverbindung sein.

Beispielsweise ist es hier möglich, dass durch eine Person die zu reinigende Wäsche einer Waschmaschine vor der Verfärbung durch die Farbe in der Flüssigkeit, welche beispielhaft aus Textilien freigesetzt worden ist, gehindert werden kann, wenn diese eine Nachricht auf ein mobiles Endgerät erhält.

Gemäß einer besonders bevorzugten Ausführungsform kann es vorgesehen sein, dass die Sensorvorrichtung eine oder mehrere Lichtquellen aufweist. Besonders bevorzugt ist die eine oder mehreren Lichtquellen lichtsenderseitig, das heißt auf der Lichtsenderseite, angeordnet. Weiter bevorzugt können durch die eine oder mehreren Lichtquellen bevorzugt zumindest zwei der Primärfarben, also rot, grün oder blau, der additiven Farbmischung durch die eine oder mehreren Lichtquellen ausgesandt werden. Durch die Dämpfung des ausgesandten Lichts der primären Farben rot, grün oder blau durch die Flüssigkeit kann die entsprechende Farbe der Flüssigkeit bestimmt werden. Die Lichtquelle kann aus mehreren einzelnen Lichtquellen gebildet sein, welche separate Lichtquellen darstellen. Die Lichtquelle kann dabei bevorzugt aus folgender Gruppe sein: eine LED, ein Laser, eine Superlumineszenz-LED, ein thermischer Strahler, oder jede Kombination davon sein, welche bevorzugt zumindest zwei der Primärfarben rot, grün und blau, gegebenenfalls jeweils mit einer bestimmten Wellenlänge, aussenden kann. Besonders bevorzugt ist es vorgesehen, dass die eine oder mehreren Lichtquellen drei der Primärfarben aussenden können. Durch die zumindest zwei, bevorzugt drei, der Primärfarben kann jede Farbe im additiven Farbraum dargestellt werden.

Gemäß einer besonders bevorzugten Ausführungsform ist es vorgesehen, dass mittels der einen oder mehreren Lichtquellen zumindest zwei Farben, bevorzugter drei Farben, des sichtbaren Lichts (390 nm bis 790 nm) ausgesendet bzw. emittiert werden kann. Besonders bevorzugt sind die Farben unterschiedlich zueinander ausgebildet, um den additiven Farbraum abdecken zu können. Rein beispielhaft kann die Farbe rot mit einer Peak-Wellenlänge aus einem Bereich von 625 nm bis 635 nm, die Farbe Grün mit einer Peak-Wellenlänge aus einem Bereich von 510 nm bis 540 nm und die Farbe Blau mit einer Peak-Wellenlänge aus einem Bereich von 450 nm bis 480 nm ausgesendet werden. Besonders bevorzugt sind die Peak-Wellenlängen für rot bei 630 nm, für grün bei 520 nm und für blau bei 465 nm.

Gemäß einer weiteren bevorzugten Ausführungsform kann es vorgesehen sein, dass zumindest eine weitere Lichtquelle vorgesehen ist, das heißt, eine weitere oder mehrere weitere Lichtquellen. Mittels der weiteren Lichtquelle(n) kann UV-Licht und/oder Infrarot (IR)-Licht ausgesendet werden. Hierdurch ist es möglich, zusätzliche Informationen, etwa Streuung und dergleichen an Partikeln oder Fluoreszenz aus der Wechselwirkung von UV- oder IR-Licht mit der Flüssigkeit zugewinnen.

Es ist ebenso denkbar, breitbandige Lichtquellen in der Sensorvorrichtung vorzusehen, wie beispielsweise LEDs, die weißes Licht emittieren. Werden von der Lichtquelle bzw. den Lichtquellen beispielsweise drei Farben ausgesendet, so sind in der bevorzugten Ausführung für eine erste Farbe Peak-Wellenlängen im Bereich 400-500 nm, für eine zweite Farbe Peak-Wellenlängen im Bereich 500-600 nm und für eine dritte Farbe Peak-Wellenlängen im Bereich 600-700 nm denkbar. Die Farben können ein Farbdreieck im Farbdiagramm aufspannen. Das Spektrum des Lichts der farbigen Lichtquellen im sichtbaren Bereich unterliegt typischerweise einer Gauß- oder Lorentzverteilung um eine Peak-Wellenlänge herum. UV- und IR- Lichtquellen weisen meist ebenso einer Gauß- oder Lorentzverteilung um eine Peak-Wellenlänge herum auf.

Gemäß einer bevorzugten Ausführungsform kann es vorgesehen sein, dass die Sensorvorrichtung einen Lichtleiter aufweist. Durch einen Lichtleiter kann Licht auf einfache und kostengünstige Art und Weise übertragen werden. Weiter bevorzugt kann es vorgesehen sein, dass der Lichtleiter in die Lichtsenderseite und in die Lichtempfängerseite unterteilt ist. Durch den Lichtleiter können dementsprechend die Lichtsenderseite sowie die Lichtempfängerseite einfach ausgebildet sein.

Alternativ wäre es denkbar, dass die Sensorvorrichtung keinen Lichtleiter umfasst, so dass ein direktes Aussenden von Licht der Lichtsenderseite zu der Lichtempfängerseite vorgesehen ist.

Besonders bevorzugt sind die Lichtsenderseite und die Lichtempfängerseite in einem Abstand zueinander angeordnet. Das bedeutet, dass die Lichtquelle(n) und der/die Lichtempfänger zueinander beabstandet sind, wobei der Abstand größer Null ist.

Weiter bevorzugt ist auf der Lichtsenderseite die eine oder mehrere Lichtquellen angeordnet. Bevorzugt ist auf der Lichtempfängerseite der eine oder mehrere Lichtempfänger angeordnet.

Die Farben werden von der einen oder mehreren Lichtquellen ausgesendet, mittels des Lichtleiters von der Lichtsenderseite durch die Flüssigkeit hindurch zu der Lichtempfängerseite gesendet und entsprechend zu dem Lichtempfänger übertragen. Um eine Vermischung hinsichtlich der Absorptionsrate beim Durchqueren der Flüssigkeit zu vermeiden, ist es gemäß einer besonders bevorzugten Ausführungsform vorgesehen, dass die Farben nacheinander in einer bestimmten oder bestimmbaren Reihenfolge mittels der Lichtquelle(n) aussendbar sind. Dies bedeutet zum Beispiel, dass zunächst die erste Farbe, beispielhaft Rot, dann die zweite Farbe, beispielhaft Grün, und auch abschließend die dritte Farbe, beispielhaft Blau, von der Lichtquelle ausgesendet werden und entsprechende Signale aufgenommen werden.

Gemäß einer weiteren bevorzugten Ausführungsform ist es vorgesehen, dass nach dem Aussenden einer Farbe durch den Lichtempfänger das Licht empfangbar ist und ein entsprechendes Sensorsignal erhaltbar ist.

Gemäß einer bevorzugten Ausführungsform kann es vorgesehen sein, dass mittels des einen oder mehreren Lichtempfängern verschiedene Wellenlängenbereich nacheinander in einer bestimmten Reihenfolge empfangbar sind. Hierdurch können die einzelnen Wellenlängen nacheinander ausgewertet bzw. zugeordnet werden.

Besonders bevorzugt ist das Sensorsignal abhängig von der Farbe der Flüssigkeit. Dadurch, dass die Flüssigkeit beispielsweise in einer Farbe eingefärbt ist, die beispielsweise Kleidung ausgefärbt hat, wird das Licht einer Farbebesser absorbiert als das Licht einer anderen bzw. weiteren Farbe. Rein beispielhaft wird blaues und grünes Licht bei einer roten Einfärbung des Flüssigen Mediums stärker absorbiert als das rote Licht, welches hier nur kaum absorbiert wird. Bei beispielsweise einer orangen oder gelben Flüssigkeit wird Blau am stärksten absorbiert, während grün nur wenig und rot kaum absorbiert wird.

Das entsprechende Sensorsignal des Lichtempfängers ist daher abhängig von der Farbe des Reinigungswasser, sodass Rückschlüsse auf die tatsächliche Farbe getroffen werden können.

Besonders bevorzugt ist es vorgesehen, dass der eine oder mehreren Lichtempfänger zumindest eines ist ausgewählt aus der Gruppe umfassend ein Fototransistor, eine Photodiode, ein Bolometer, und jede Kombination davon. Grundsätzlich wäre auch noch eine Laserdiode denkbar. Mithilfe des Lichtempfängers, beispielsweise eines Fototransistors, kann dabei das jeweilige Licht detektiert werden und ein entsprechendes Signal an das System ausgeben werden. Bei einem Phototransistor wird durch das empfangene Licht ein Photostrom erzeugt, dieser ist umso größer, je mehr Licht empfangen wird. Der Photostrom kann mit einer geeigneten Schaltung am Phototransistor abgegriffen werden und zu einem anderen Signal umgewandelt werden, beispielsweise einer Spannung. Analog dazu wird auch für die anderen Arten der Empfänger ein geeignetes Ausgangssignal erzeugt. Als weitere Empfänger können hintereinanderliegende Sensoren oder aktive Schichten, so zum Beispiel Phototransistoren mit unterschiedlichen Bandlücken in den aktiven Zonen verwendet werden. Darüber hinaus können 1-Pixel oder Multi-Pixel-RGB-Kameras als Empfänger dienen.

Besonders bevorzugt ist es vorgesehen, dass als Lichtempfänger Phototransistoren, Photodioden, Bolometer, Laserdioden oder jede beliebige Kombination dieser genannten Empfänger verwendet werden. Entlang der Messstrecke wird das vom Sender ausgesandte Licht gedämpft bzw. abgeschwächt und am Ende der Messstrecke vom Empfänger, z. B. einem Phototransistor erfasst. Das empfangene Licht wird dann beispielsweise in ein elektrisches Signal umgewandelt, beispielsweise in eine Spannung. Der Wert des Ausgangssignals ist dabei abhängig von der Dämpfung des Lichts durch die Messstrecke.

Je nachdem welche Wellenlänge das ausgesandte Licht hat, wird dieses entlang der Messstrecke durch die Medien, welche es durchquert, unterschiedlich stark gedämpft. Es sind für verschiedene Wellenlängen also auch verschiedene Ausgangssignale, beispielsweise in Form einer elektrischen Spannung zu erwarten. Anhand der resultierenden Ausgangssignale kann auf die Farbe der Flüssigkeit innerhalb der Messstrecke geschlossen werden.

Weiter bevorzugt ist es vorgesehen, dass das Sensorsignal, beispielsweise eine Spannung für jede Farbe des vom Sender bzw. den Sendern empfangenen Lichts separat, wie beispielsweise der ersten, zweiten und dritten Farbe, beispielhaft in Form von Rot, Grün, Blau, am Lichtempfänger bzw. den Lichtempfängern aufnehmbar ist. Die entsprechenden bzw. jeweiligen Sensorsignale können anschließend beispielsweise mittels einer Steuereinheit, kombiniert werden, um die Farbe der Flüssigkeit, vorliegend in dem additiven Farbraum, zu bestimmen.

Bevorzugt verwendet werden können breitbandige Empfänger, die Licht in einem großen Wellenlängenbereich empfangen können. Weiterhin können die Empfänger beispielsweise mit einem Kurz- oder Langpassfilter oder einem Bandpassfilter ausgestattet sein. Ebenso könnten die Lichtquellen mit Wellenlängenfiltern ausgestattet sein. Diese Filter könnten jedoch auch als separates Bauteil, beispielsweise auf Senderseite und-/ oder Empfängerseite realisiert werden. Die Filter können auch als separates Bauteil in Form eines schaltbaren, segmentierten Filterrades angeordnet sein, sodass je Segment verschiedene Wellenlängenbereiche eingestellt werden, welche herausgefiltert werden können. Ein solches Filterrad könnte sowohl auf Sender- als auch auf Empfängerseite verwendet werden. Ein Filterrad könnte verschiedene Segmente aufweisen, welche unterschiedliche Wellenlängenbereiche herausfiltert. Alternativ könnte es sich bei den Filtern um schaltbares Glas handeln, dessen Transmission in bestimmten Wellenlängenbereichen durch Anlegen einer elektrischen Spannung oder einer Temperatur variiert werden kann. Solche Gläser können elektrochrom oder thermochrom sein. Es kann sich auch um LC-Glas handeln, dessen Funktion ähnlich eines LC-Displays ist. Weiterhin können mehrere Empfänger auch als Detektorarray angeordnet sein.

Gemäß einer besonders bevorzugten Ausführungsform ist es vorgesehen, dass die Sensorvorrichtung kalibriert bzw. kalibrierbar ist. Dabei bezieht sich die Kalibrierung insbesondere auf eine unverfärbte und klare bzw. transparente Flüssigkeit, d. h. beispielsweise Leitungswasser oder destilliertes Wasser. Dieses führte dazu, dass beim Senden des Lichts von der Lichtsenderseite zu der Lichtempfängerseite bzw. von Lichtquelle(n) zu Lichtempfänger(n) das Sensorsignal des Lichtempfängers bzw. der Lichtempfänger einer unverfärbten Flüssigkeit, beispielsweise der Reinigungsflüssigkeit, zugeordnet werden kann. Dadurch, dass durch die Verfärbung der Flüssigkeit eine oder mehrere Lichtteile absorbiert werden, ändert sich auch das Ausgangssignal des Sensors, beispielsweise die Spannung, die beim Erfassen des Lichtes ausgegeben wird.

Die Farbe im additiven Farbraum kann dabei wie im Folgenden dargestellt werden und bestimmt werden.

Dadurch, dass das Licht bzw. die Farben des Lichts wie beispielsweise rot, grün, blau durch die Flüssigkeit absorbiert bzw. teilweise absorbiert werden, ändert sich entsprechend das Sensorausgangssignal, das zum Beispiel eine Spannung, ein Strom, ein PWM, oder dergleichen, und jegliche Kombination davon, sein kann. Dieser Zusammenhang gilt für Licht jeder Wellenlänge, auch in dem anwendbaren Bereich zwischen 200 nm und 2500 nm.

Es kann dabei verstanden werden, dass die Kalibrierung den Wert 100 % beträgt bzw. entspricht, sodass eine absorbierte Lichtfarbe dann einen entsprechend geringeren Prozentsatz ausmacht. Dieser Prozentsatz kann dabei mit dem Farbfaktor des additiven Farbraums von 255 multipliziert werden. Der Wert 255 entspricht für die jeweilige Farbe dem Maximalwert der Farbe. Wird der ermittelte Prozentsatz mit dem Farbraumwert 255 multipliziert, so entsteht für jede der vorliegenden Farben ein entsprechender Wert im additiven Farbraum. Die Kombination der ermittelten Werte im Farbraum für rot, grün und blau geben dann die drei Intensitäten im additiven Farbraum vor, wodurch die Farbe, in welcher die Flüssigkeit vorliegt, bestimmt werden kann.

Alternativ können Farbraumwerte auch auf einer Skala als Prozentwerte mit Werten von 0 bis 100 % und/oder als Faktor mit Werten von 0 bis 1 oder in anderen Einheiten und gegebenenfalls linearen und nichtlinearen Skalierungen davon angegeben werden. Die Berechnung der Farbraumwerte anhand der Sensorsignale erfolgt dabei jedes Mal analog dazu.

Weiter ist es gemäß einer besonders bevorzugten Ausführungsform vorgesehen, dass insbesondere zusätzlich ein Aussenden eines Infrarotlichts bzw. eines Lichts im Infrarotbereich vorgesehen ist. Hierdurch lässt sich die Trübheit des vorliegenden Reinigungswassers überprüfen, insbesondere unter der Annahme geringer optischer Absorption in der Flüssigkeit im IR-Spektrum. Dadurch, dass bei einer relativ trüben oder einer hohen Trübheit des Reinigungswassers die jeweiligen Farben rot, grün, blau ebenfalls durch Reflexionen oder Streuung an Schmutzpartikel oder dergleichen in der Intensität verringert werden können, ist eben vorgesehen, die Farben in Abhängigkeit der Trübheit der Reinigungsflüssigkeit darzustellen. Es lässt sich damit darauf schließen, ob eine Absorption einer Farbe aufgrund der Trübheit der Reinigungsflüssigkeit oder aufgrund der Färbung der Reinigungsflüssigkeit zustande gekommen ist.

Es ist bekannt, dass die optische Streuung wellenlängenabhängig sein kann. Oft sind kürzere Wellenlängen nichtlinear stärker von der Streuung beeinflusst als längere Wellenlängen. Dies gilt sowohl global über den sichtbaren Bereich als auch über den Bereich der verbreiterten Emission der einzelnen Lichtquellen. Durch diese Nichtlinearität wird der detektierte Peak der Emission und das Lichtspektrum verändert und zu längeren Wellenlängen hin verschoben. Dies kann durch eine repräsentative Messung der Streuung im ausgewählten absorptionsfreien IR-Bereich, beispielsweise softwarebasiert, kompensiert werden.

Weiter ist es möglich, dass gemäß einer besonders bevorzugten Ausführungsform es vorgesehen ist, dass die Reinigungsflüssigkeit bzw. das Reinigungswasser bereits durch ein Waschmittel oder dergleichen vorgefärbt ist. Um zu erkennen, dass die Färbung des Reinigungswassers aufgrund des Waschmittels und nicht aufgrund eines Farbverlustes von zum Beispiel Kleidung ausgeht, kann es möglich sein, in der vorliegenden Steuereinheit den Farbton des Waschmittels zu berücksichtigen. Änderungen der Farbe der Flüssigkeit, welche die Farbe des Waschmittels bereits aufweist, ist mittels der vorliegenden Erfindung weiterhin möglich.

Weiter kann es vorgesehen sein, dass gemäß einer bevorzugten Ausführungsform es vorgesehen ist, dass die Steuereinheit bei Erkennen einer Verfärbung bzw. Färbung des Reinigungswassers, welche unerwünscht ist, mittels einer Benachrichtigung auf eine Applikation oder dergleichen beispielsweise auf einem Smartphone, geschickt werden kann. Hierdurch kann der jeweilige Nutzer des Haushaltsgeräts darüber informiert werden, dass eine Färbung der zu reinigenden Gegenstände, beispielsweise der Wäsche, zu erwarten ist und der Waschvorgang daher abzubrechen wäre.

Dementsprechend kann es gemäß einer weiteren bevorzugten Ausführungsform vorgesehen sein, dass falls eine Verfärbung des Reinigungswassers festgestellt ist, dass Haushaltsgerät automatisch durch ein entsprechendes Steuersignal der Steuereinheit gestoppt werden kann, sodass ebenfalls eine weitere Verfärbung des zu reinigenden Gegenstands vermieden werden kann.

Darüber hinaus ist es möglich, mittels der Färbung des Reinigungswassers eine entsprechende Überwachungsmöglichkeit hinsichtlich verschiedener Behandlungsprozesse darzustellen, beispielsweise in der Textilindustrie. Hier wäre es von Vorteil, dass das Abwasser, welche beim Färbeprozess anfällt, ohne den jeweiligen Rückstand des Färbemittels in die Umwelt eingeleitet wird.

Ebenfalls ist es gemäß einer bevorzugten Ausführungsform denkbar, dass die Kalibrierung nicht hinsichtlich eines ungefärbten und transparenten Wassers durchgeführt wird, sondern auch beispielsweise hinsichtlich eines oft verwendeten Reinigungswassers mit einem oder mehreren bestimmten Waschmittelzusätzen. Dies kann beispielsweise als Kalibrierung hinterlegt werden, sodass der Einfluss des Waschmittels gering gehalten werden kann.

Gemäß einer weiteren bevorzugten Ausführungsform kann es vorgesehen sein, dass die Sensorvorrichtung eine Speichereinheit umfasst. In der Speichereinheit können beispielsweise die verschiedenen Waschmittelzusätze, Kalibrierungseinstellungen und dergleichen abgespeichert werden und bei Bedarf geändert, hinzugefügt oder gelöscht werden. Entsprechend kann dann zu jeden Waschvorgang ein entsprechender Satz, welche dem tatsächlichen Einsatz des Haushaltsgeräts entspricht, aufgerufen werden.

Gemäß einer weiteren bevorzugten Ausführungsform kann es vorgesehen sein, dass die Sensorvorrichtung an eine Datenbank angebunden ist, beispielsweise über Internet/LAN und mit dieser in beide Richtungen kommunizieren kann. In der Datenbank können beispielsweise Messgrößen bzw. ermittelte Kenngrößen beispielsweise zu verschiedenen Waschmittelzusätze, Kalibrierungseinstellungen und dergleichen abgespeichert werden und bei Bedarf geändert, hinzugefügt oder gelöscht werden. Entsprechend kann dann zu jeden Waschvorgang ein entsprechender Satz, welche dem tatsächlichen Einsatz des Haushaltsgeräts entspricht, aufgerufen werden. Weiterhin können über die Datenbank Updates bezogen werden.

Gemäß einer weiteren bevorzugten Ausführungsform kann es vorgesehen sein, dass die (spektrale) Messwertsignatur mithilfe künstlicher Intelligenz (KI) ausgewertet wird. Die Kl kann dabei unterstützen, eine Flüssigkeit hinsichtlich ihrer chemischen und physikalischen Eigenschaften zu charakterisieren.

Gemäß einer weiteren bevorzugten Ausführungsform ist es vorgesehen, dass genau ein Lichtempfänger vorgesehen ist, beispielsweise in Form eines Fototransistors. D. h., dass die Sensorvorrichtung genau einen Fototransistor umfassen kann. Hierdurch ist es möglich, die Anzahl an benötigten Bauteilen weiter zu reduzieren. Entsprechend ist die Sensorvorrichtung daher so konfiguriert, dass die verschiedenen Farben der Lichtquelle derart umgelenkt werden, dass diese auf den Fototransistor auftreffen können. Hierzu ist der beispielsweise eine Lichtumlenkstruktur bzw. ein Lichtführungselement, beispielsweise ein (totalreflektierender) Umlenkspiegel, vorgesehen, welcher derart ausgebildet ist, dass die verschiedenen Lichtstrahlen auf eine möglichst kleine Fläche konzentriert werden oder idealerweise bzw. bevorzugt in einem Punkt fokussiert werden, in welchem sich der Fototransistor befindet.

Gemäß einer besonders bevorzugten Ausführungsform weist die Sensorvorrichtung ein Lichtführungselement auf, wobei das Lichtführungselement dazu vorgesehen und ausgebildet ist, Licht derart umzulenken, dass dieses in einem einzigen Punkt oder nahe des einzigen Punkts fokussiert ist. In diesem Punkt ist bevorzugt der Lichtempfänger angeordnet.

Sind beispielsweise mehrere Lichtquellen als separate Bauteile vorgesehen, so können die jeweiligen Strahlengänge entsprechend zusammengeführt werden und von dem Lichtempfänger besser erfasst werden.

Gemäß einer weiteren bevorzugten Ausführungsform kann es vorgesehen sein, dass das Lichtführungselement ein Parabelelement ist bzw. parabelförmig ausgebildet ist oder eine gekrümmte Fläche ist. Hierdurch kann die Umlenkung des Lichts und Fokussierung in einen Punkt gut durchgeführt werden.

Weiter bevorzugt ist das Lichtführungselement am Lichtleiter in der Nähe des Lichtempfängers angeordnet.

Gemäß einer weiteren bevorzugten Ausführungsform kann es vorgesehen sein, dass die Sensorvorrichtung ein Gehäuse umfasst. Besonders bevorzugt sind die elektronischen Komponenten, wie etwa Lichtempfänger, Lichtquelle(n), Lichtleiter innerhalb des Gehäuses angeordnet. Weiter bevorzugt ist das Gehäuse zumindest teilweise lichtdurchlässig ausgebildet. Weiter bevorzugt ist das Gehäuse derart ausgebildet, dass dieses gegenüber der Flüssigkeit abgedichtet ist.

Gelöst wird die zugrunde liegende Aufgabe ebenfalls von einem Verfahren zum Bestimmen einer Farbe einer Flüssigkeit, wobei das Verfahren die Verfahrensschritte umfasst:
a) Bereitstellen eines Haushaltsgeräts nach einer bevorzugten Ausführungsform;
b) Aussenden von Licht mittels der Lichtquelle oder mehrerer Lichtquellen;
c) Empfangen des Lichts mittels des Lichtempfängers oder mehrerer Lichtempfänger und Erhalten eines Sensorsignals;
d) Kombinieren der Sensorsignale und Bestimmen einer Farbe der Flüssigkeit.

Weiterführende Ausgestaltungen und Ausbildungen der Ausführungsformen untereinander sind auf die weiteren Ausführungen anwendbar und sind untereinander frei kombinierbar, sofern sie nicht gegenläufigen Ausführungsformen entsprechen. Weitere vorteilhafte Ausführungsformen ergeben sich aus den Unteransprüchen.

Die Merkmale hinsichtlich der strukturellen Ausgestaltung sowie die Verfahrensmerkmale können in korrespondierende Weise verwendet werden. Ebenso können Merkmale, die lediglich in Kombination mit weiteren Merkmalen offenbart sind, auch unabhängig von diesen Merkmalen als offenbart angesehen werden.

Die Erfindung wird nachfolgend in Zusammenhang mit den Figuren näher dargestellt.

Weitere Ziele, Vorteile und Zweckmäßigkeiten der vorliegenden Erfindung sind der nachfolgenden Beschreibung in Verbindung mit den Figuren bzw. Zeichnungen zu entnehmen. Hierbei zeigen:
- Figur 1: Haushaltsgerät mit Sensorvorrichtung;
- Figur 2A: schematische Darstellung der Sensorvorrichtung gemäß einer Ausführungsform;
- Figur 2B: schematische Darstellung der Sensorvorrichtung gemäß einer weiteren Ausführungsform;
- Figur 3: Schaltung der Sensorvorrichtung gemäß einer Ausführungsform;
- Figur 4: Wellenlängenspektrum;
- Figur 5A: Fotografie von Proben;
- Figur 5B: Tabelle der Proben;
- Figur 6A: Sensorvorrichtung mit Lichtführungselement;
- Figur 6B: Sensorvorrichtung mit Lichtführungselement;
- Figur 7A-7D: Sensorvorrichtungen nach den Ausführungsformen der Figuren 6A und 6B
- Figur 8: Verfahrensablauf zur Bestimmung der Farbe des Reinigungswassers.

In den Figuren sind gleiche Bauteile jeweils mit den entsprechenden Bezugszeichen zu verstehen. Zur besseren Übersichtlichkeit können manchen Figuren Bauteile nicht mit einem Bezugszeichen versehen sein, jedoch an anderer Stelle bezeichnet worden sind.

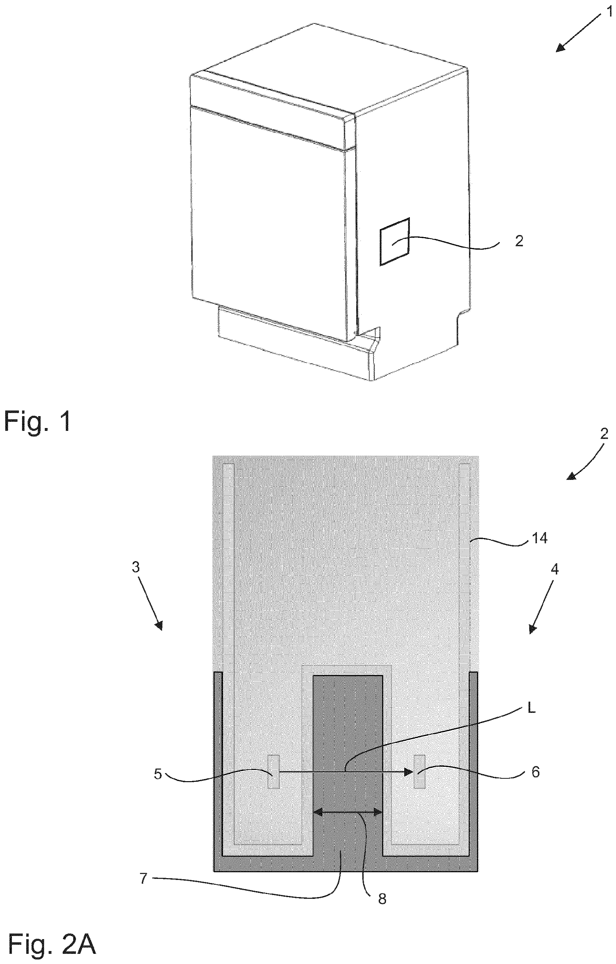

Gemäß der Figur 1 ist schematisch ein Haushaltsgerät 1 dargestellt, welche beispielsweise als ein Geschirrspüler, als eine Waschmaschine oder dergleichen ausgebildet sein kann. Das Haushaltsgerät 1 umfasst dabei eine Sensorvorrichtung 2, welche in dem Haushaltsgerät 1 als integriert ist. Dabei ist es bevorzugt vorgesehen, dass die Sensorvorrichtung 2 zumindest teilweise in Kontakt mit einer Flüssigkeit 7, beispielsweise einem Reinigungswasser 7, in Kontakt steht. Ebenso ist eine Steuereinheit 17 dargestellt, an welche bevorzugt die Sensorsignale angebunden werden können. Mittels der Steuereinheit 17 kann es möglich sein, dass das Hausgerät 1 Aktionen in Abhängigkeit der Messergebnisse bzw. Sensorsignale ausführen kann bzw. den Betrieb des Hausgeräts 1 zu steuern vermag. Solche Aktionen können beispielsweise Fehlermeldungen, akustische Signale, Anpassen des Waschprogramms oder Kommunikation mit dem Smartphone über eine Drahtlosverbindung, wie etwa WLAN, Bluetooth, oder dergleichen sein.

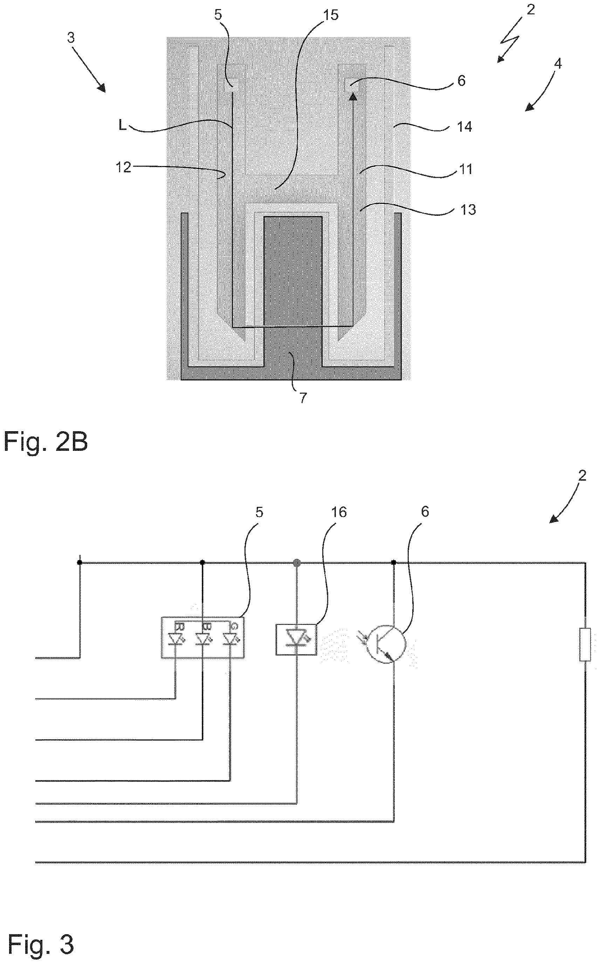

In den Figuren 2A und 2B ist die Sensorvorrichtung 2 gemäß zweier Ausführungsformen näher dargestellt, wobei gewisse Bauteile bereits vorhanden sind, da die Sensorvorrichtung 2 auf einem Trübheitssensor basiert, sodass Ergänzungen hinsichtlich der nun vorliegenden Sensorvorrichtung 2 als notwendig sind. Unabhängig von der Ausgestaltung weist die Sensorvorrichtung 2 eine Lichtsenderseite 3 und eine Lichtempfängerseite 4 auf. Ebenso sind mindestens eine Lichtquelle 5 und mindestens ein Lichtempfänger 6 vorgesehen. Mittels der Lichtquelle 5 kann Licht ausgesendet werden. Beispielsweise handelt es sich bei der Lichtquelle 5 um eine LED-Lichtquelle, welche Licht mit einer bestimmten Wellenlänge bzw. Licht mit bestimmten Wellenlängen aussenden kann.

Gemäß der Figur 2A ist ein Ausschnitt der Sensorvorrichtung 2 dargestellt, wobei auf der Lichtsenderseite 3 eine oder mehrere Lichtquellen 5 und auf der Lichtempfängerseite ein oder mehrere Lichtempfänger 6 angeordnet sind. Mittels der Lichtquelle(n) 5 kann Licht ausgesendet werden und mittels der Lichtempfänger 6 empfangen werden. Beispielhaft ist das Licht als ein Lichtpfad L zwischen Lichtquelle 5 und Lichtempfänger 6 dargestellt.

Weiter bevorzugt sind die Lichtsenderseite 3 und die Lichtempfängerseite 4 zueinander beabstandet angeordnet, das heißt, in einem Abstand 8 zueinander angeordnet. Besonders bevorzugt sind die Seiten 3, 4 fingerartig ausgebildet. Zwischen der Lichtsenderseite 3 und der Lichtempfängerseite 4 ist eine Flüssigkeit 7 vorgesehen, so dass das ausgesendete Licht von der Lichtsenderseite 3 zu der Lichtempfängerseite 4 durch die Flüssigkeit 7 hindurchtritt.

Weiter ist ein Gehäuse 14 vorgesehen, in welchem sich die elektronischen Bauteile befinden, um diese gegenüber der Flüssigkeit 7 abzudichten.

In der Figur 2B ist eine weitere bzw. weiterführende Ausführungsform der Sensorvorrichtung 2 dargestellt.

Bevorzugt umfasst die Sensorvorrichtung 2 auf der Lichtsenderseite 3 eine Lichtquelle 5. Die Sensorvorrichtung 2 weist einen Lichtleiter 11 mit einem ersten Lichtleiterelement 12 und einem zweiten Lichtleiterelement 13 auf. Bevorzugt ist das erste Lichtleiterelement 12 auf der Lichtsenderseite 3 und das zweite Lichtleiterelement 13 auf der Lichtempfängerseite 4 angeordnet. Bevorzugt können die Lichtleiterelemente 12, 13 miteinander verbunden sein, beispielsweise mittels eines Verbindungselements 15. Hierdurch kann die Stabilität des Lichtleiters 11 erhöht werden. Die Ausführungen und Ausgestaltungen der Figur 2A gelten auch für die Figur 2B.

Das Licht, dargestellt durch den Lichtpfad L, der Lichtquelle 5 wird an das erste Lichtleiterelement 12 ausgesendet, mittels des ersten Lichtleiterelements 12 transportiert und zu einem zweiten Lichtleiterelement 13 übertragen. Dabei ist es besonders bevorzugt vorgesehen, dass die Lichtleiterelemente 12, 13 voneinander beabstandet sind in einem Abstand 8. Wenn das Licht in dem zweiten Lichtleiterelement 4 geleitet wird, wird das Licht zu einem oder mehreren Lichtempfängern 6 übertragen, wobei der Lichtempfänger 6 derart ausgebildet ist, das Licht zu empfangen und ein entsprechendes Sensorsignal auszugeben. Beim Übertragen des Lichts von dem ersten Lichtleiterelement 12 zu dem zweiten Lichtleiterelement 13 durchquert das Licht die Flüssigkeit 7.

Dadurch, dass die Lichtleiter 12, 13 bereits vorhanden sein können, sind die Lichtquelle 5 und der Lichtempfänger 6 von den jeweiligen Lichtleiterelement 12, 13 beabstandet angeordnet. In bereits vorhandenen Trübungssensoren kann das bestehende Standard Trübungssensor Design verwendet werden, indem beispielsweise eine Multi-Chip LED vorgesehen ist, welche beispielhaft die Farben Rot, Grün und blau und/oder Weiß aussenden kann. So kann die Funktionalität hinsichtlich der Erkennung einer der Farbe der Flüssigkeit 7 nachträglich in den bereits vorhandenen Trübheitssensor integriert werden.

Es kann auch vorgesehen sein, dass der Lichtempfänger 6 und die Lichtquelle 5 zumindest signaltechnisch miteinander verbunden sein können, sodass eine Veränderung bzw. Abweichung des empfangenen Sensorsignals des Lichtempfängers 6 in Abhängigkeit von dem in der Lichtquelle 5 vorhandenen Referenzwert verglichen werden.

Besonders bevorzugt wird das am Lichtempfängers 6 ankommende Licht mit einer geeigneten Schaltung in eine elektrische Größe, beispielsweise eine Spannung umgewandelt, wobei die elektrische Größe, also bspw. die Spannung, das Ausgangssignal darstellen kann. Liegt zwischen den Lichtseiten 3, 4 beim Messen eine Referenzflüssigkeit vor, so kann das Ausgangssignal, beispielsweise eine Spannung, als Bezugswert für den Referenzzustand genommen werden. Jegliche Abweichung vom Referenzzustand erzeugt ein anderes Messergebnis, bzw. ein anders Ausgangssignal, wie beispielsweise eine Spannung. Anhand der Absorption oder Dämpfung von Licht bzw. gewissen Wellenlängen des Lichts, kann dann auf die Farbe der Flüssigkeit 7 geschlossen werden kann.

Das Sensorsignal ist abhängig von der Intensität bzw. einem nicht-absorbierten Teil des übertragenen Lichts ist.

Dabei ist es besonders bevorzugt, dass der Lichtempfänger 6 als ein Fototransistor ausgebildet ist. Der Fototransistor ist dabei empfindlich hinsichtlich des übertragenen Lichts, wobei beim Auftreffen von Licht auf den Fototransistor durch den photoelektrischen Effekt ein Photstrom erzeugt wird, der mit einer geeigneten elektrischen Schaltung zu einem Ausgangssignal weiterverarbeitet werden kann. Das Ausgangssignal kann beispielsweise eine Spannung sein, die folglich von der Intensität des am Empfänger ankommenden Lichts anhängig ist.

Ein beispielhafter Ausschnitt aus der Verschaltung der vorliegenden Lichtquelle 5 und dem Lichtempfänger 6 liegt gemäß der Figur 3 vor. Ebenso kann ein oder mehrere weitere Lichtquellen 16 vorgesehen sein, welche beispielsweise UV-Licht und/oder IR-Licht aussenden können. Grundsätzlich kann je nach Ausgestaltung der Sensorvorrichtung 2 die Schaltung entsprechend angepasst sein.

Die Sensorvorrichtung 2 kann bevorzugt entsprechend kalibriert werden, wobei eine Kalibration beispielsweise hinsichtlich einer Referenzflüssigkeit durchgeführt werden kann. Besonders bevorzugt kann es sich bei der Referenzflüssigkeit um klares Wasser bzw. um destilliertes Wasser handeln, sodass das empfangene Licht mittels des Lichtempfängers 6 und dem entsprechenden Sensorsignal als die Referenz angegeben werden können. Wird das ausgesandte Licht entlang der Messstrecke gedämpft, so verändert sich das Ausgangssignal in Abhängigkeit dieser Dämpfung. Über die Abweichung zum Referenzsignal können Rückschlüsse auf die Eigenschaften der Flüssigkeit gewonnen werden, wie beispielsweise die Farbe.

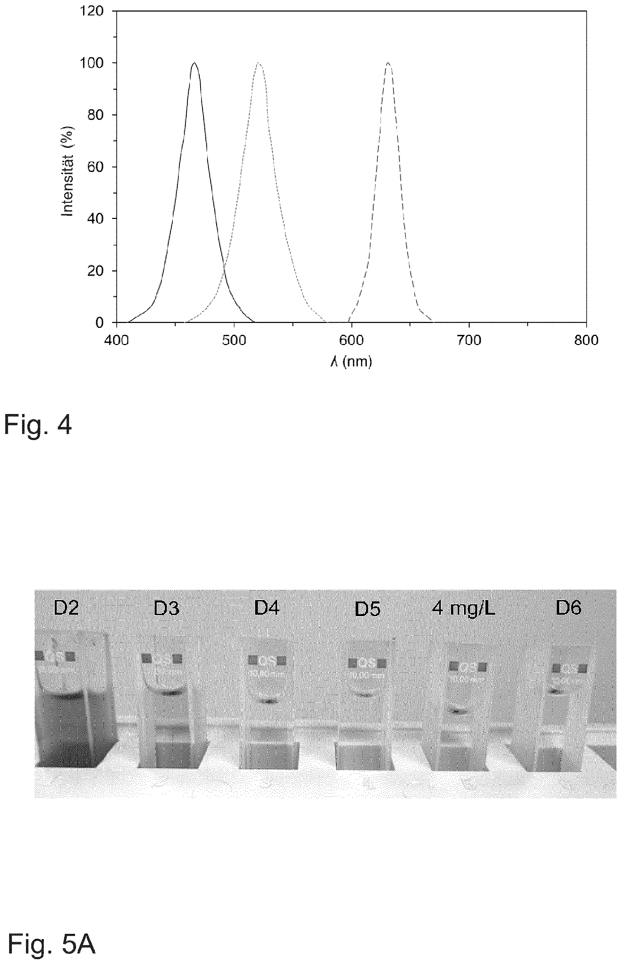

Gemäß der Figur 4 ist beispielhaft dargestellt, welche Farben mittels der einen oder mehreren Lichtquellen 5 ausgesendet werden können. Dabei ist es vorgesehen, wie auch in der Figur 3 gezeigt, dass die Lichtquelle 5 dazu vorgesehen ist, zumindest drei verschiedene Farben auszusenden, wobei weiter bevorzugt die ausgesendeten Farben Primärfarben rot, grün und blau der additiven Farbmischung sind. Gemäß der Figur 4 ist weiter vorgesehen, wo die jeweiligen Wellenlängenbereiche bzw. die entsprechende Peak-Wellenlänge des jeweiligen Bereiches liegen können.

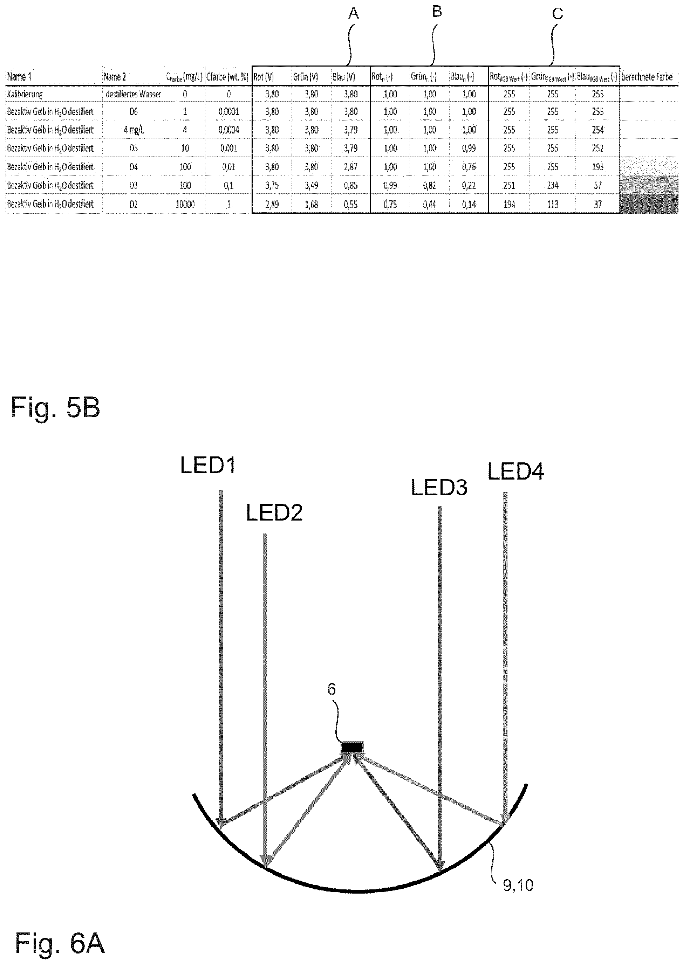

In den Figuren 5A und 5B ist eine Probenreihe dargestellt, mit der entsprechenden Auswertung und wie durch die Sensorvorrichtung 2 die Farbe der Flüssigkeit 7 bestimmt werden kann.

Kalibriert bzw. referenziert ist das vorliegende System mit der Sensorvorrichtung 2 auf destilliertes Wasser. Es sind hierbei weitere Proben angegeben, welche entsprechend nummeriert bzw. bezeichnet sind. Die Farbunterschiede sind in der Figur 5A deutlich zu erkennen. Die von dem Lichtempfänger 6 ausgegebenen Werte hinsichtlich der übertragenen bzw. übermittelten Farben rot, grün und blau sind dementsprechend als 100 % hinterlegt. Abweichungen in der Ausgabe des Lichtempfängers 6, also des Fototransistors, werden dementsprechend in geringeren Prozentzahlen angegeben. Dies ist beispielsweise bei den Proben D3 und D2 zu erkennen. Ebenso ist erkennbar, welche der Farben rot, grün und blau entsprechend absorbiert werden.

Nach Bestimmung bzw. nach dem Erhalt der jeweiligen Sensorwerte werden diese Werte mit dem Maximalwert des additiven Farbraums multipliziert, wobei dieser Wert 255 ist. Der erhaltene Wert, also der multiplizierte Wert des 255-Werts mal dem jeweiligen Prozentsatz ergibt den jeweiligen Wert im additiven Farbraum. Dies wird mit jeder der Farben rot, grün, blau durchgeführt, sodass der jeweilige Farbton des additiven Farbraums durch die Kombination der drei Multiplikationswerte bestimmt werden kann. Wie aus dem Vergleich der Farben der Figuren 5A und 5B zu erkennen ist, ist die Berechnung bzw. die Bestimmung sehr genau.

Im AbschnittA der Figur 5B sind die jeweiligen Messwerte und der Referenzwert dargestellt. Im Abschnitt B der Figur 5B ist das Verhältnis des jeweiligen Messwerts zu dem Referenzwert dargestellt. Im Abschnitt C ist abschließend der jeweilige berechnete Wert des additiven Farbraums dargestellt, mittels welchem die Farbe im additiven Farbraum ermittelbar ist.

Gemäß einer bevorzugten Ausführungsform soll es vorgesehen sein, dass ein einziger Lichtempfänger 6 vorgesehen sein soll. Um verschiedene Lichtstrahlen bzw. mehrere Lichtpfade auf das einzige Lichtempfängerelement 6 fokussieren zu können, ist es bevorzugt vorgesehen, dass ein Lichtführungselement 9 vorgesehen ist, wobei das Lichtführungselement 9 dazu vorgesehen und ausgebildet ist, Licht derart umzulenken, dass dieses in einen einzigen Punkt fokussiert ist. Besonders bevorzugt ist dieses Lichtführungselement 9 in der Figur 6A dargestellt, wobei Lichtführungselement 9 ein Parabelelement oder gekrümmte Fläche 10 dargestellt ist. Die Bezeichnungen LED1 bis LED4 sind dabei für verschiedene Ausgaben bzw. Lichtaussendungen der Lichtquelle 5 dargestellt, welche beispielsweise den Farben rot, grün, blau sowie einer Infrarot-Lichtquelle entsprechen können.

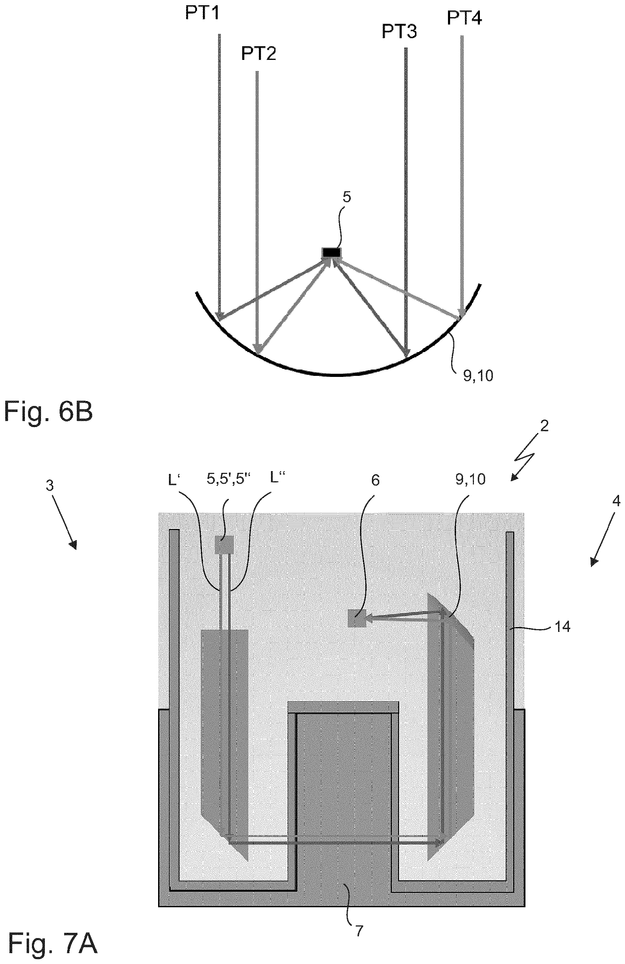

Umgekehrt wäre es gemäß einer Ausführungsform, wie in der Figur 6B gezeigt, möglich, dass eine einzelne Lichtquelle 5 vorgesehen ist, welche beispielsweise als eine Breitbandlichtquelle, beispielsweise eine weißfarbige LED, vorgesehen ist, welche mittels des Lichtführungselements 9 bzw. dem Parabelelement 10 aufgeteilt werden kann, welche das jeweilige Lichtsignal an entsprechend ausgebildete Fototransistoren ausgeben kann, wobei bevorzugt die Fototransistoren derart ausgebildet sind, dass diese lediglich hinsichtlich eines bestimmten Wellenlängenbereichs sensitiv sind bzw. dem Lichtführungselement 9 und dem Fototransistor entsprechende Filter angeordnet sind, welche das Licht der Lichtquelle 5 filtern kann. Bevorzugt können die Filter auch in dem jeweiligen Lichtempfänger angeordnet sein.

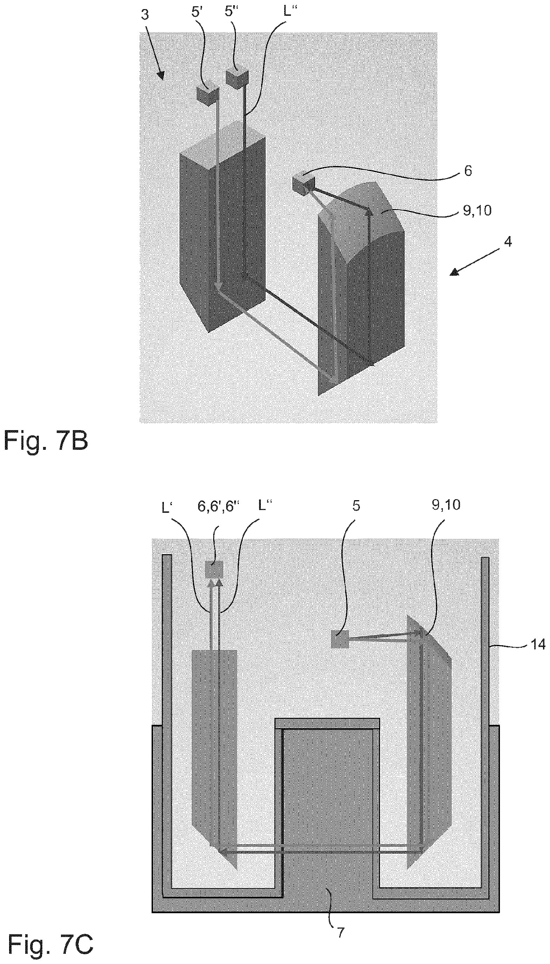

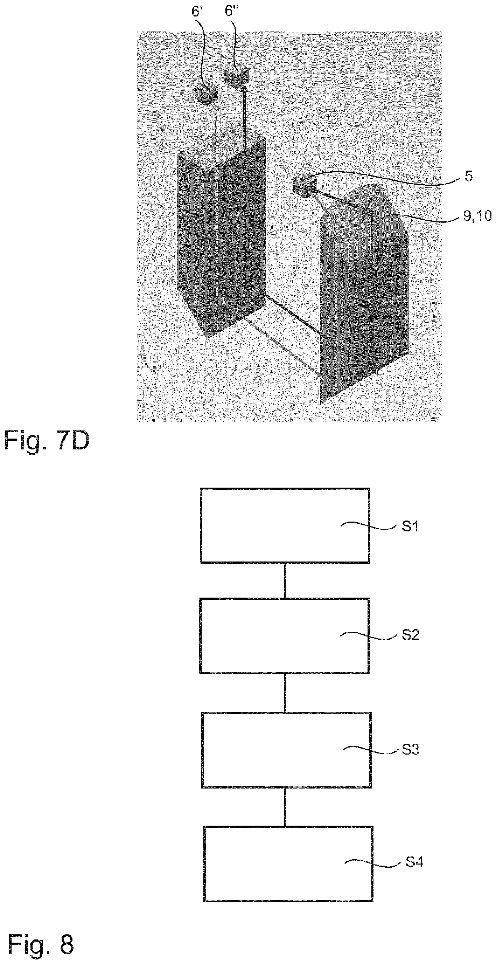

Rein beispielhaft ist eine Sensorvorrichtung 2 mit dem Lichtführungselement 10 in den Figuren 7A bis 7D dargestellt. In den Figuren 7A und 7B sind mehrere Lichtquellen 5 bei einem einzigen Lichtempfänger 6 dargestellt. In den Figuren 7C und 7D sind mehrere Lichtempfänger 6 bei einer einzelnen Lichtquelle 5 dargestellt.

Gemäß der Figuren 7A und 7B sind zumindest zwei Lichtquellen 5, 5', 5" dargestellt, welche jeweils einem ersten bzw. zweiten Lichtpfad L', L" zugeordnet ist. Die Übertragung des Lichts von der Lichtquelle 5, 5', 5" zu dem Lichtempfänger 6 wurde bereits dargestellt. Vor dem Lichtempfänger 6 ist nun zusätzlich das Lichtführungselement 9 angeordnet, welches die Lichtpfade L', L" auf einen Punkt fokussiert, in welchem der Lichtempfänger 6 angeordnet ist.

In den Figuren 7C und 7D ist der anders geartete Fall dargestellt, mit einer einzelnen Lichtquelle 5 und mehreren Lichtempfängern 6, 6', 6".

In der Figur 8 ist noch rein beispielhaft das Verfahren zum Bestimmen einer Farbe des Reinigungswassers 7 dargestellt, wobei das Verfahren die Verfahrensschritte umfasst:
S1: in diesem Schritt wird ein entsprechendes Haushaltsgerät 1 bereitgestellt, welches die erfindungsgemäße Sensorvorrichtung 2 aufweist. Im nächsten Schritt S2 als wird mittels der der Lichtquelle 5 Licht ausgesendet und bevorzugt über die Lichtleiter 3, 4 zu dem Lichtempfänger 6 übertragen. Im Schritt S3 als wird das Licht mittels des Lichtempfängers 6 empfangen und ein entsprechendes Sensorsignal des Lichtempfängers 6 erhalten. Nach Erhalt des jeweiligen Sensorsignals, beispielsweise für die verschiedenen Farben der Lichtquelle 5, werden diese Sensorsignale miteinander kombiniert und aus der Kombination der Sensorsignale die Farbe des Reinigungswassers 7 bestimmt.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weitere Merkmale aus dieser Figur vorteilhaft sein kann. Ferner erkennt der Fachmann, dass sich auch Vorteile durch eine Kombination mehrerer, in einzelnen oder in unterschiedlichen Figuren gezeigten Merkmale ergeben können.

### Bezugszeichenliste

- 1: Haushaltsgerät
- 2: Sensorvorrichtung
- 3: Lichtsenderseite
- 4: Lichtempfängerseite
- 5. 5`, 5": Lichtquelle
- 6, 6', 6": Lichtempfänger
- 7: Flüssigkeit, Reinigungswasser
- 8: Abstand
- 9: Lichtführungselement
- 10: Parabelelement
- 11: Lichtleiter
- 12: erstes Lichtleiterelement
- 13: zweites Lichtleiterelement
- 14: Gehäuse
- 15: Verbindungselement
- 16: weitere Lichtquelle
- 17: Steuereinheit
- L, L`, L": Lichtpfad

## Patentansprüche

1. Haushaltsgerät (1) mit einer Sensorvorrichtung (2), wobei die Sensorvorrichtung (2) dazu ausgebildet und vorgesehen ist, wobei anhand einer spektralen Messwertsignatur Informationen über chemische und/oder physikalische Eigenschaften einer Flüssigkeit, beispielsweise eine Trübheit einer Flüssigkeit (7), bestimmbar sind, wobei die Sensorvorrichtung (2) eine Lichtsenderseite und eine Lichtempfängerseite aufweist, wobei Licht von der Lichtsenderseite zu der Lichtempfängerseite übertragbar ist und nach der Übertragung mittels eines oder mehrerer Lichtempfänger (6) empfangbar ist, **dadurch gekennzeichnet, dass**
die Sensorvorrichtung (2) weiter dazu vorgesehen und ausgebildet ist, eine Farbe der Flüssigkeit (7) zu erkennen.

2. Haushaltsgerät (1) nach Anspruch 1,
**dadurch gekennzeichnet, dass**
die Sensorvorrichtung (2) lichtsenderseitig eine oder mehrere Lichtquellen (5) aufweist, wobei zumindest zwei der Primärfarben der additiven Farbmischung durch die eine oder mehrere Lichtquellen (5) aussendbar sind.

3. Haushaltsgerät (1) nach Anspruch 2,
**dadurch gekennzeichnet, dass**
die eine oder mehreren Lichtquellen drei der Primärfarben aussenden kann.

4. Haushaltsgerät (1) nach Anspruch 1,
**dadurch gekennzeichnet, dass**
die Sensorvorrichtung eine oder mehrere Lichtquellen aufweist, mittels welcher ein breitbandiges Spektrum emittiert werden kann.

5. Haushaltsgerät (1) nach einem der Ansprüche 1 bis 4,
**dadurch gekennzeichnet, dass**
zumindest eine weitere Lichtquelle vorgesehen ist, mittels welcher Infrarot- und/oder UV-Licht aussendbar ist.

6. Haushaltsgerät nach Anspruch 5,
**dadurch gekennzeichnet, dass**
die zumindest eine weitere Lichtquelle eines ist ausgewählt aus der Gruppe umfassend: eine LED, ein Laser, eine Superlumineszenz-LED, oder jede Kombination davon.

7. Haushaltsgerät (1) nach einem der Ansprüche 2 bis 3,
**dadurch gekennzeichnet, dass**
die Farben nacheinander in einer bestimmten Reihenfolge mittels der einen oder mehreren Lichtquellen (5) aussendbar sind.

8. Haushaltsgerät nach einem der Ansprüche 1 bis 7,
**dadurch gekennzeichnet, dass**
mittels des einen oder mehreren Lichtempfänger verschiedene Wellenlängenbereiche nacheinander in einer bestimmten Reihenfolge empfangbar sind.

9. Haushaltsgerät (1) nach einem der Ansprüche 2 bis 7,
**dadurch gekennzeichnet, dass**
nach dem Aussenden einer Farbe das Licht mittels des einen oder mehreren Lichtempfänger (6) empfangbar ist und ein entsprechendes Sensorsignal erhaltbar ist, wobei das Sensorsignal abhängig ist von der Farbe der Flüssigkeit (7).

10. Haushaltsgerät (1) nach Anspruch 9,
**dadurch gekennzeichnet, dass**
der eine oder mehrere Lichtempfänger (6) zumindest eines ist ausgewählt aus der Gruppe umfassend einen Phototransistor, eine Photodiode, eine Laserdiode, ein Bolometer, und jegliche Kombinationen daraus, so dass das Sensorsignal zumindest eines ist ausgewählt aus der Gruppe umfassend eine Spannung, ein Strom, PWM, oder jegliche Kombination davon, wobei das Sensorsignal für jede Farbe aufnehmbar ist und die jeweiligen Sensorsignale kombinierbar sind, um die Farbe der Flüssigkeit(7) im additiven Farbraum zu bestimmen.

11. Haushaltsgerät nach einem der Ansprüche 1 bis 10,
**dadurch gekennzeichnet, dass**
die Sensorvorrichtung einen Lichtleiter umfasst, welcher in die Lichtsenderseite und in die Lichtempfängerseite unterteilt ist.

12. Haushaltsgerät nach Anspruch 11,
**dadurch gekennzeichnet, dass**
der Lichtleiter ein erstes Lichtleiterelement und ein zweites Lichtleiterelement umfasst, wobei durch das erste Lichtleiterelement die Lichtsenderseite und durch das zweite Lichtleiterelement die Lichtempfängerseite bereitgestellt ist.

13. Haushaltsgerät nach einem der Ansprüche 1 bis 12,
**dadurch gekennzeichnet, dass**
die Lichtsenderseite und die Lichtempfängerseite in einem Abstand zueinander angeordnet sind.

14. Haushaltsgerät nach Anspruch 11 oder 12,
**dadurch gekennzeichnet, dass**
der Lichtleiter ein Lichtführungselement aufweist, wobei das Lichtführungselement dazu vorgesehen und ausgebildet ist, Licht derart umzulenken, dass dieses in einen einzigen Punkt fokussiert ist, wobei in dem einzigen Punkt ein einziger Lichtempfänger vorgesehen ist.

15. Haushaltsgerät nach Anspruch 14,
**dadurch gekennzeichnet, dass**
das Lichtführungselement ein Parabelelement und/oder eine gekrümmte Fläche ist.

16. Haushaltsgerät nach einem der Ansprüche 1 bis 13,
**dadurch gekennzeichnet, dass**
der Lichtleiter ein Lichtführungselement aufweist, wobei das Lichtführungselement dazu vorgesehen und ausgebildet ist, Licht mit einem breitbandigen Spektrum in mehrere einzelne Lichtstrahlen aufzuteilen.

17. Haushaltsgerät nach Anspruch 16,
**dadurch gekennzeichnet, dass**
mehrere Lichtempfänger vorgesehen sind, welche dazu vorgesehen und ausgebildet sind, die einzelnen Lichtstrahlen zu empfangen.

18. Haushaltsgerät nach Anspruch 16,
**dadurch gekennzeichnet, dass**
ein einziger Lichtempfänger vorgesehen ist, welcher dazu vorgesehen und ausgebildet ist, breitbandiges Licht zu empfangen.

19. Haushaltsgerät nach Anspruch 17,
**dadurch gekennzeichnet, dass**
die Lichtempfänger jeweils eine unterschiedliche spektrale Empfindlichkeit aufweisen, so dass jeder der Lichtempfänger Licht mit einer verschiedenen Farbe empfangen kann.

20. Haushaltsgerät nach Anspruch 17,
**dadurch gekennzeichnet, dass**
zwischen dem Lichtempfänger und dem Lichtführungselement ein oder mehrere optische Filterelemente angeordnet sind, welche dazu vorgesehen und ausgebildet sind, das Licht optisch zu filtern.

21. Haushaltsgerät nach einem der vorangegangenen Ansprüche,
**dadurch gekennzeichnet, dass**
die spektrale Messwertsignatur mithilfe künstlicher Intelligenz (KI), insbesondere hinsichtlich der Charakterisierung einer Flüssigkeit in ihren chemischen und physikalischen Eigenschaften, auswertbar ist.

22. Verfahren zum Bestimmen einer Farbe eines Reinigungswassers (), umfassend die Verfahrensschritte:
a) Bereitstellen eines Haushaltsgeräts (1) nach einem der Ansprüche 1 bis 19;
b) Aussenden von Licht mittels der Lichtquelle (5);
c) Empfangen des Lichts mittels des einen oder mehreren Lichtempfänger (6) und Erhalten eines Sensorsignals;
d) Kombinieren der Sensorsignale und Bestimmen einer Farbe der Flüssigkeit (7).
